**Europäisches Patentamt**

**European Patent Office**

**Office européen des brevets**

(19)

(11) **EP 0 980 506 B1**

(12) **FASCICULE DE BREVET EUROPEEN**

(45) Date de publication et mention
de la délivrance du brevet:
**11.04.2001 Bulletin 2001/15**

(51) Int Cl.⁷: **G01B 3/20**

(86) Numéro de dépôt international:
**PCT/CH97/00177**

(21) Numéro de dépôt: **97917974.4**

(22) Date de dépôt: **09.05.1997**

(87) Numéro de publication internationale:
**WO 98/51990 (19.11.1998 Gazette 1998/46)**

(54) **CALIBRE ELECTRONIQUE PORTABLE DE PRECISION**

ELEKTRONISCHE TRAGBARE PRÄZISIONSKALIBER

PORTABLE PRECISION ELECTRONIC CALLIPER

(84) Etats contractants désignés:
**CH DE ES FR GB IT LI**

(43) Date de publication de la demande:
**23.02.2000 Bulletin 2000/08**

(73) Titulaire: **Brown & Sharpe Tesa S.A.**
**1020 Renens (CH)**

(72) Inventeurs:
• **Bézinge, Alex**
**2207 Coffrane NE (CH)**

• **BOLLI, Jean-Luc**
**CH-1209 Genève (CH)**

(74) Mandataire: **Saam, Christophe**
**Patents & Technology Surveys SA**
**Faubourg du Lac 2**
**Case Postale 1448**
**2001 Neuchâtel (CH)**

(56) Documents cités:
EP-A- 0 286 820      EP-A- 0 557 149
US-A- 5 029 402      US-A- 5 174 041
US-A- 5 463 805

## Description

La présente invention concerne un calibre portable de précision, ou pied à coulisse, utilisé pour effectuer des mesures de dimensions linéaires. Plus précisément, la présente invention concerne un calibre portable de précision de type électronique.

Les calibres traditionnels à vernier ont peu à peu tendance à être supplantés par des calibres électroniques qui offrent un confort de lecture supérieur pour un prix compétitif. La plupart des calibres électroniques répandus actuellement utilisent un capteur de type capacitif. Les variations de capacité provoquées entre un réseau d'électrodes sur la perche du calibre et un réseau d'électrodes placées en regard sur le coulisseau sont mesurées de manière à fournir une indication qui dépend de la position du coulisseau le long de la perche. Cette information est affichée sur un écran généralement solidaire du coulisseau. Des circuits de ce type sont décrits par exemple dans la demande de brevet EP96810686 au nom de la demanderesse.

Le principe de mesure capacitif s'est imposé d'une part parce qu'il offre une résolution et une précision excellentes, et d'autre part parce que la consommation électrique de ces dispositifs est très réduite, ce qui permet de les alimenter sur pile par exemple. Ces calibres à capteur de type capacitif doivent cependant être maintenus propres pour fonctionner correctement. Ils sont donc mal adaptés à un fonctionnement dans un environnement humide ou sujet aux projections de lubrifiant ou aux poussières par exemple. Dans ces milieux difficiles, les calibres manuels à vernier ou à montre tendent par conséquent à être toujours préférés aux calibres électroniques.

Le document EP286820 décrit un calibre comprenant une règle munie de portions magnétisées. Une tête de lecture magnétique est disposée sur le coulisseau et enregistre les variations de champ magnétique occasionnées par le déplacement du coulisseau. Une telle tête magnétique est toutefois relativement onéreuse et volumineuse, en sorte qu'il est difficile de l'intégrer dans le volume réduit d'un calibre. La précision de mesure dépend directement de la précision et du bruit dans la tête magnétique, ainsi que du positionnement correct de la tête face à la règle. En outre, la résolution offerte par ce dispositif est limitée,

Le document EP-A1-0840095 décrit un encodeur magnétique muni d'une règle magnétisée et d'un capteur apte à se déplacer en regard de la règle. Le capteur comporte un réseau d'électrodes magnétorésistives. Se référant à ce document, la demanderesse a procédé de sa propre initiative à une limitation et présenté des revendications séparées pour l'Allemagne et le Royaume-Uni.

Un but de la présente invention est donc de proposer un calibre électronique portable amélioré par rapport aux dispositifs de l'art antérieur. En particulier, un but de la présente invention est de proposer un calibre muni d'un capteur peu sensible aux poussières et aux lubrifiants, offrant une résolution de l'ordre du centième de millimètre et une précision de l'ordre de quelques centièmes de millimètre, c'est-à-dire des performances comparables à celles offertes par les calibres capacitifs pour un coût similaire, et dont la consommation électrique est suffisamment réduite pour pouvoir être alimenté par une simple batterie, par exemple par une pile au lithium.

Ce but est atteint selon l'invention au moyen d'un capteur présentant les éléments de la partie caractérisante de la revendication 1, des modes de réalisation avantageux étant en outre indiqués dans les autres revendications.

Plus précisément, ce but est atteint selon l'invention au moyen d'un capteur à électrodes magnétorésistives adapté à un calibre électronique portable.

La perche du calibre de l'invention est munie d'une règle magnétisée avec une période de magnétisation $\lambda$. Le capteur est muni d'un réseau d'électrodes magnétorésistives disposées en regard de ladite règle en sorte que les valeurs de résistance des électrodes magnétorésistives soient une fonction périodique de la position longitudinale du capteur le long de la règle. Le nombre d'électrodes magnétorésistives est grand, en tous les cas supérieur à 2. Des moyens permettent de déterminer à partir des valeurs de résistance des électrodes magnétorésistives une indication dépendant de la distance entre les becs du calibre. Cette indication est affichée sur un affichage électronique.

Des capteurs à électrodes magnétorésistives permettant d'effectuer des mesures de dimensions linéaires ou angulaires sont connus en tant que tels. La résistance des électrodes magnétorésistives des capteurs connus est cependant trop faible pour permettre une alimentation sur pile ou sur batterie. L'utilisation de ces capteurs à forte consommation électrique dans des appareils autonomes électriquement, par exemple dans des calibres de précision portables, n'a par conséquent pas été envisagée.

Des calibres utilisant les propriétés de matériaux magnétorésistifs ont déjà été décrits par exemple dans les documents de brevet US5029402, US4226024 et US5174041. Ces documents décrivent des calibres munis de deux capteurs distincts constitués chacun d'une électrode magnétorésistive. La distance entre les deux capteurs est critique et détermine la précision de mesure obtenue. Le principe adopté utilisant uniquement deux électrodes magnétorésistives ne permet pas de construire des calibres de précision, c'est-à-dire des calibres aptes à mesurer des longueurs avec une précision et une résolution inférieure à 0,1mm. Pour ces raisons, l'utilisation de ces calibres est réservée à des applications particulières telles que la mesure de pièces de boucherie ou de diamètres de troncs, pour lesquels la précision requise est très peu critique. L'enseignement de ces documents n'est en revanche pas transposable au domaine technique bien différent de la mesure de précision.

L'invention sera mieux comprise à la lecture de la description donnée à titre d'exemple et illustrée par les figures qui montrent :

La figure 1 une vue en éclaté d'un calibre électronique portable selon la présente invention.

La figure 2 un agrandissement d'une portion des moyens électroniques mis en oeuvre dans le calibre de la présente invention.

La figure 3 une vue schématique en perspective du capteur magnétorésistif au-dessus de la règle dans un calibre selon la présente invention.

La figure 4 un schéma électrique illustrant la manière dont les électrodes magnétorésistives sont connectées entre elles de manière à constituer des ponts de mesure.

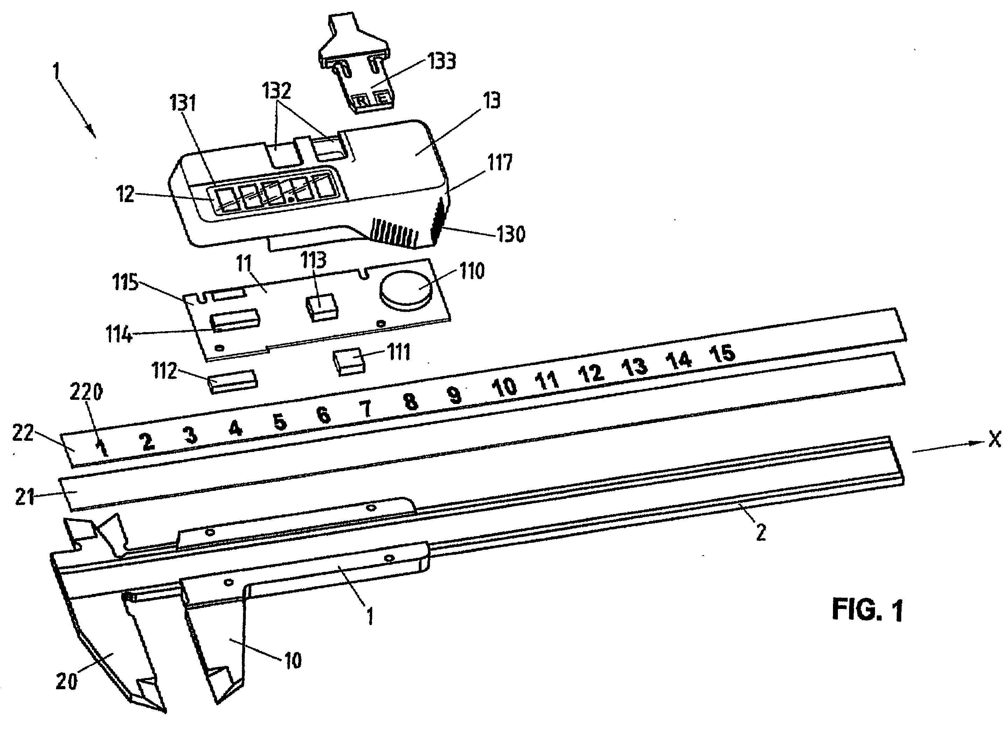

La figure 1 illustre en éclaté un calibre électronique portable selon la présente invention. La construction de tels calibres est connue et a été décrite par exemple dans la demande de brevet EP719999 au nom de la demanderesse, dont le contenu est ici incorporé par référence. Ce document contient en particulier un mode de réalisation possible et avantageux des moyens de guidage du coulisseau le long de la perche, ainsi que des moyens de réglage des becs.

Le calibre de l'invention comprend une perche 2 et un coulisseau 1 apte à être déplacé longitudinalement le long de la perche. La perche peut avoir différentes longueurs selon l'utilisation prévue du calibre ; des longueurs typiques étant par exemple 15, 20 ou 40 centimètres. Le coulisseau est muni d'un bec mobile 10 tandis que la perche est équipée d'un bec fixe 20 ; un affichage 12, par exemple un affichage à cristaux liquides, affiche une indication dépendant de l'écartement des deux becs. Par exemple, l'affichage 12 peut indiquer sur cinq chiffres, dont deux après la virgule, la distance en millimètre entre les deux becs 10 et 20.

Une règle magnétique 21 est fixée sur la perche par n'importe quels moyens de fixation connus, par exemple par collage. La règle s'étend de préférence sur toute la longueur de la perche 2. Dans une variante, la règle s'étend longitudinalement seulement sur la portion de la perche 2 au-dessus de laquelle le capteur 112 (décrit plus bas) est susceptible d'être déplacé.

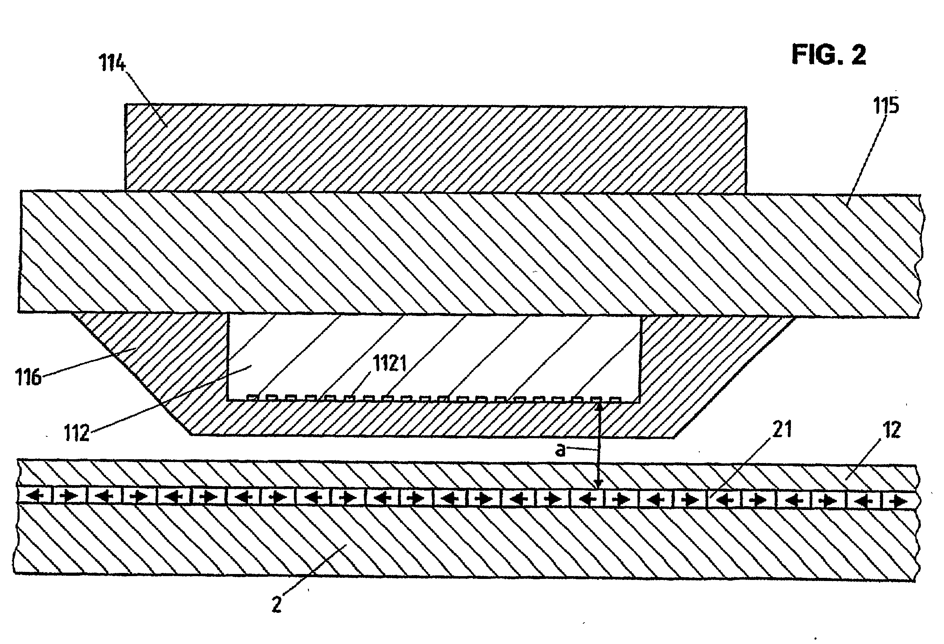

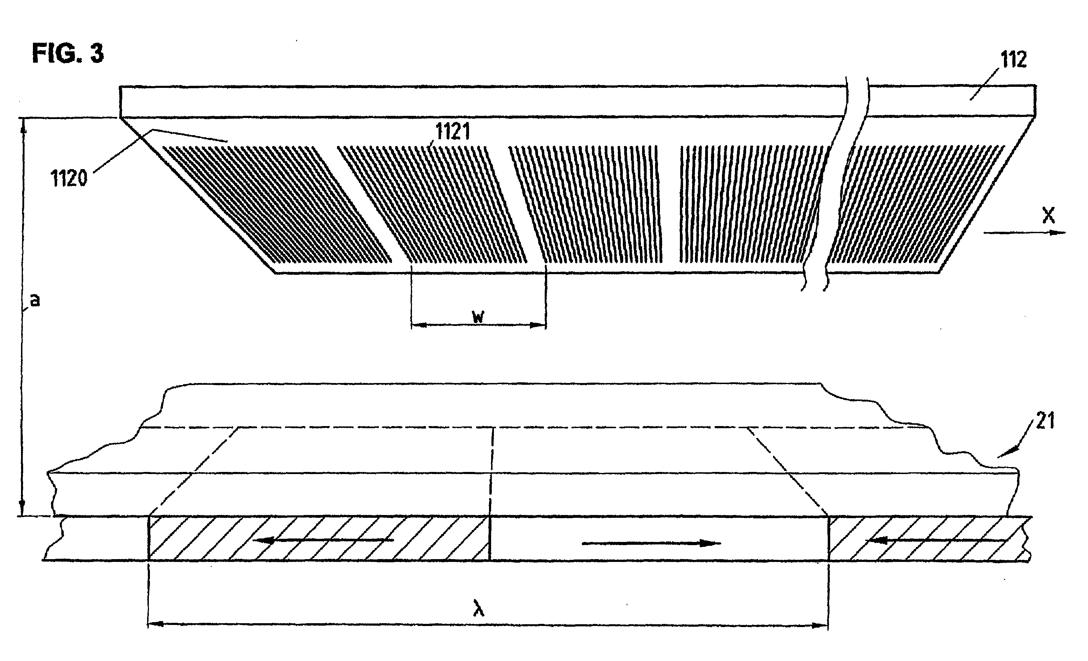

La perche 2 et le coulisseau 1 sont de préférence construits en métal, par exemple en aluminium pour une exécution économique ou en acier pour une autre forme d'exécution plus robuste. La règle 21 est obligatoirement réalisée en matériau magnétique permanent, par exemple à partir d'un support en acier doux ou en verre recouvert d'une couche de ferrite à haute coercitivité. La règle est magnétisée avec une période de magnétisation $\lambda$, comme on le voit particulièrement sur les figures 2 et 3. Sur l'exemple illustré par les figures, la magnétisation périodique est essentiellement horizontale, c'est-à-dire dans l'axe longitudinal de la règle 21. Une règle avec une magnétisation périodique verticale, perpendiculaire à l'axe de la règle, peut cependant aussi être construite et présente l'avantage d'une meilleure stabilité des domaines magnétiques voisins, moins susceptibles d'être déplacés par un champ magnétique parasite.

Notons que bien que la perche et la règle sont dans cet exemple préférentiel assemblées à partir de deux pièces séparées, il est aussi possible de magnétiser directement la perche si elle est réalisée en un matériau qui s'y prête, et d'avoir ainsi une règle et une perche intégrées en un seul élément.

La règle 21 est recouverte d'une couche protectrice en matériau non magnétique 22. La couche protectrice peut par exemple être réalisée à partir d'une feuille synthétique auto-adhésive munie d'une impression 220 permettant à l'utilisateur d'évaluer directement la mesure effectuée, sans lire l'affichage 12.

Dans cet exemple, le coulisseau 1 entoure la perche 2 sur trois côtés, c'est-à-dire sur le dessous et sur les côtés latéraux. Une plaque de circuit imprimé 115 est fixée directement sur le dessus du coulisseau, de préférence par vissage. L'usinage du coulisseau et de la plaque 115 est suffisamment précis pour maîtriser la distance entre la règle 21 et la plaque de circuit imprimé 115 avec une excellente précision ; si nécessaire, des moyens appropriés peuvent être prévus pour ajuster cet écartement.

Des moyens électroniques, indiqués de manière générale par la référence 11, permettent d'afficher sur l'affichage électronique à cristaux liquides 12 une indication dépendant de la distance entre les becs du calibre 10 et 20. Ces moyens électroniques sont assemblés directement sur la plaque de circuit imprimé 115. Ils comprennent principalement un capteur magnétorésistif unique 112, représenté schématiquement sur la figure 3, assemblé sous la plaque de circuit imprimé 115 en regard de la règle magnétique 21. Le capteur 112 comporte un réseau formé d'un nombre important d'électrodes magnétorésistives 1121 (figure 2) organisées en groupes 1120, la valeur des diverses résistances du réseau étant une fonction périodique de la position du coulisseau 1 le long de la perche 2. Une couche d'epoxy 116 protège le capteur magnétorésistif 112 afin d'empêcher que les pistes magnétorésistives 1121 soient arrachées par des poussières sur la perche. Les moyens 11 comprennent en outre des moyens d'alimentation électrique autonome, dans l'exemple représenté une pile 110. La pile 110 est de préférence constituée par une pile plate au lithium et doit garantir plusieurs heures de fonctionnement autonome au dispositif. Les moyens d'alimentation électrique pourraient également comprendre ou être constitués par une cellule photovoltaïque sur le boîtier du coulisseau. En option, les moyens d'alimentation comprennent également une génératrice linéaire 111 montée sous la plaque de circuit imprimé 115 et en regard de la règle 21. La génératrice linéaire 111 comprend par exemple des éléments de type bobine inductive. Lorsque le coulisseau 1 est déplacé le long de la règle, le champ magnétique variable à travers les éléments de bobine inductive génère un courant dans ces éléments qui peut être utilisé pour recharger un accumulateur ou la pile rechargeable 110. Un circuit intégré de type ASIC 113 détermine à partir des valeurs de résistance des électrodes magnétorésistives sur le capteur 112 une indication dépendant de la distance entre les becs 10 et 20, et commande l'affichage 12 pour afficher cette distance. Les moyens électroniques 11 comprennent en outre de préférence un aimant permanent 114 optionnel monté sur la face supérieur du circuit imprimé 115, face au capteur 112. Cet aimant permanent permet de polariser les électrodes magnétorésistives 1121 du capteur 112 pour lui donner les caractéristiques requises.

Les moyens électroniques 11 sont protégés par un boîtier 13, de préférence un boîtier en matériau synthétique antichoc. La forme du boîtier est ergonomique et permet de déplacer le coulisseau aisément dans les deux directions : à cet effet, le boîtier 13 est muni d'une portion proéminente 130 antiglisse grâce à laquelle la manipulation du coulisseau est particulièrement aisée. Une fenêtre 131 à travers le boîtier 13 permet de voir l'affichage 12. Des boutons 132 permettent de commander par exemple la mise en marche du calibre ou d'autres fonctions telles que remise à zéro, addition ou moyennage de mesures successives, etc.. Le boîtier peut être retiré ou ouvert au moins partiellement pour le remplacement de la pile 110. Un connecteur optoélectronique 133 optionnel est prévu comme interface entre le calibre 1 et des instruments extérieurs tels qu'imprimante, ordinateur personnel ou machine par exemple.

Le capteur magnétorésistif 112 comporte un grand nombre d'électrodes magnétorésistives 1121, visibles de manière schématique sur la figure 3. Les électrodes 1121 sont disposées en un réseau d'électrodes parallèles. La longueur des électrodes est comprise dans l'intervalle entre 0,1 et 10 millimètres et de préférence juste inférieure à la largeur du chip 112. Par exemple, si la largeur du capteur 112 est de 1,4 millimètre, la longueur des électrodes magnétorésistives sera par exemple choisie proche de 1 millimètre. La largeur des électrodes est extrêmement fine, aussi fine que le permet à l'heure actuelle la technologie de fabrication du capteur, de préférence inférieure à 40$\mu$m, par exemple 5$\mu$m. Leur épaisseur est inférieure à 100 nm, de préférence inférieure à 50nm. Ces dimensions permettent d'obtenir des électrodes intégrées de haute résistance et donc de réduire la consommation électrique du capteur bien en deçà de celle des capteurs de l'art antérieur, afin de l'alimenter à partir d'une simple pile 110. Ces dimensions permettent en outre d'obtenir une sensibilité au champ magnétique de la règle suffisante pour que les variations de résistances des électrodes puissent être mesurées sans difficulté excessive par l'électronique du capteur.

Les différentes électrodes magnétorésistives 1121 sont disposées longitudinalement sur le capteur 112 de manière à occuper diverses positions de phase par rapport au champ magnétique $H_x(x)$ de période $\lambda$ généré par la règle 2. A une distance a suffisante de la règle 2, le champ magnétique est une fonction approximativement sinusoïdale de x. Le champ magnétique produit par la règle 21 sur chaque électrode magnétorésistive 1121 est donc une fonction sinusoïdale de la position longitudinale de cette électrode ; la résistance de chaque électrode 1121 évolue de manière sinusoïdale lorsque le coulisseau 1 est déplacé le long de la perche. Le circuit 113 détermine à l'aide de la valeur des différentes résistances 1121 la position du coulisseau et affiche cette information sur l'affichage 112.

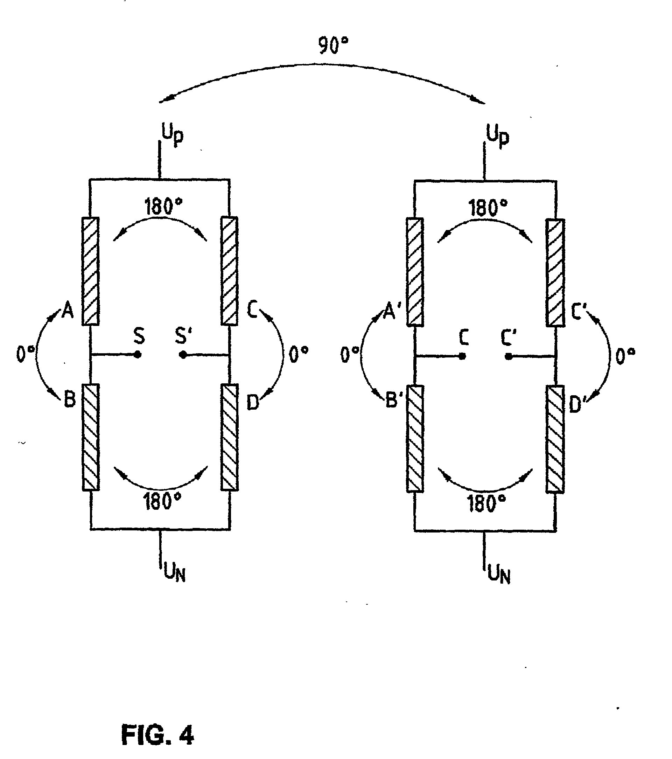

La figure 4 illustre de manière schématique un mode de connexion préférentiel des électrodes 1121. Les électrodes magnétorésistives sont connectées dans cet exemple de manière à définir deux ponts de mesure (ponts de Wheatstone). Les électrodes correspondantes de chaque pont sont déphasées de 90°, c'est-à-dire de $\lambda/4$. Chaque pont comporte quatre électrodes magnétorésistives ABCD, respectivement A'B'C'D' (ou de préférence quatre jeux d'électrodes magnétorésistives, comme on le verra plus bas). L'électrode ou jeu d'électrodes A, respectivement A', est déphasée de 180° par rapport à l'électrode, ou jeu d'électrode, C, respectivement C'. De la même façon, l'électrode ou jeu d'électrodes B, respectivement B', est déphasée de 180° par rapport à l'électrode ou jeu d'électrode D, respectivement D'.

Les électrodes A, A', B, B' occupent les mêmes positions de phase que les électrodes respectives B, B', D, D'. Les électrodes magnétorésistives de chaque paire AB, A'B', CD, C'D' sont cependant munies de structures de barberpoles orientés de manière opposée, par exemple à +45° et -45°. Il est possible de montrer qu'un champ magnétique $H_x$ identique produit sur une électrode magnétorésistive munie de structure de barberpoles orientés à +45° une variation de résistance $\Delta r$ opposée à celle produite sur une électrode magnétorésistive munie de structure de barberpole orientés à-45°. Par conséquent, l'effet de placer des structures de barberpole d'orientation opposée sur les électrodes magnétorésistives est équivalent à l'effet obtenu par un déphasage de 180°. L'utilisation de structures de barberpoles permet de contrôler la variation de résistance $\triangle R$ provoquée sur chaque électrode magnétorésistive 1121 par le champ Hx. En utilisant des structures de barberpoles avec des orientations différentes, par exemple des structures orientées à + et - 45° sur le même capteur, on gagne une liberté supplémentaire pour le placement des électrodes ce qui permet d'augmenter leur densité et d'obtenir une meilleure compensation des erreurs géométriques.

Les deux ponts sont alimentés entre deux tensions $U_P$ et $U_N$. Les signaux à la sortie des ponts sont récoltés entre les points S et S', respectivement entre les points C et C'. Le signal entre les points C et C' est déphasé de 90° par rapport au signal entre les points S et S'. L'utilisation de ponts de mesure permet de compenser des erreurs dues par exemple à l'espacement entre la règle et le capteur, et donc d'obtenir une précision de mesure inférieure à 10μm, de l'ordre de 5μm, même avec une mécanique de guidage simple comme celle que l'on trouve dans un calibre classique du type mentionné ci-dessus.

Le capteur 112 comprend en outre au moins une résistance d'équilibrage, non représentée, dont la valeur peut être ajustée par laser au cours de la fabrication de manière à équilibrer ledit pont de mesure lorsqu'aucun champ magnétique n'est appliqué. Cette résistance permet d'étalonner les ponts de mesure.

Afin de réduire encore la consommation électrique du capteur, les jeux d'électrodes A à D' sont constitués de préférence de plusieurs électrodes magnétorésistives 1121 reliées en série. Le nombre d'électrodes magnétorésistives par jeu est de préférence supérieur à 4 mais n'est limité que par la dimension du chip 112; dans un mode de réalisation de l'invention, le nombre d'électrodes magnétorésistives par jeu est égal à 72. Le nombre total d'électrodes magnétorésistives 1121 sur le capteur 112, dans cet exemple non limitatif avec deux ponts de mesure constitués chacun de 4 jeux de 72 électrodes, est alors égal à 576. La résistance de chaque jeu et de chaque pont de mesure ABCD et A'B'C'D' entre les points $U_P$ et $U_N$ peut alors être supérieure à 10kΩ, de préférence supérieure à 50kΩ, ce qui permet d'alimenter le calibre pendant plusieurs heures avec une seule pile au lithium de volume limité.

Les électrodes constituant chaque jeu peuvent occuper toutes des positions de phase identiques, c'est-à-dire des positions distantes d'une période λ. Dans une première variante préférentielle, les électrodes de chaque jeu sont réparties de manière à occuper des positions de phase proches, par exemple des positions réparties entre [kλ-w/2 et kλ+w/2] où k est un nombre entier et w un paramètre indiquant l'étalement des électrodes de chaque jeu. Dans un exemple, w est égal à λ/4. Un ensemble d'électrodes contiguës provenant du même jeu et étalées sur w est appelé un groupe et est indiqué par la référence 1120 sur la figure 3. Cette configuration permet d'obtenir une valeur résultante des résistances des jeux d'électrode A à D' qui moyenne les résistances d'électrodes étalées sur un intervalle de largeur w. Dans une seconde variante préférentielle, qui peut être combinée avec la première variante, chaque jeu comprend des électrodes positionnées avec déphasages de 180° mais avec des orientations de structures de barberpoles opposées.

Afin de compenser de manière optimale les erreurs de géométrie du système, les électrodes 1121 du capteur magnétorésistif 112 sont étalées sur k périodes λ, de préférence au moins sur deux périodes λ, par exemple sur 6 périodes, la limite supérieure n'étant déterminée que par les dimensions du chip 112.

Le champ magnétique $H_0$ à la surface de la règle est compris de préférence dans l'intervalle de 10 à 100 kA/m et décroît exponentiellement à une distance a de la surface selon la relation :

$$H_x(a)=H_0 . e^{-2\pi a/\lambda}$$

Pour des calibres portables, une distance a entre la règle 21 et les électrodes magnétorésistives 1121 inférieure à 200μm ne peut pas être réalisée sans renchérissement considérable du dispositif. L'espacement a choisi doit donc être de préférence compris entre 200μm et 700μm, valeur au delà de laquelle un élargissement de l'espacement a ne procure plus d'avantage économique important. Dans un mode de réalisation de l'invention, l'espacement a choisi est donc égal à 500μm, soit une valeur largement supérieure à la valeur de fonctionnement des capteurs magnétorésistifs habituels.

La relation ci-dessus indique que le champ magnétique $H_x(x)$ à une distance a de la règle augmente rapidement avec la période de règle λ. Pour a=λ/2, le champ magnétique H(a) ne représente déjà plus que 4% de la valeur du champ $H_0$ à la surface de la règle ; il est donc difficile d'aller au delà de λ=2a, faute de quoi le champ récolté est trop faible pour influer sensiblement sur la résistance des électrodes magnétorésistives. Les harmoniques différentes de n=1 de $H_x(x, a)$ sont toutefois réduites si λ décroît, ce qui permet d'améliorer la précision. Des essais ont démontré empiriquement que le compromis optimal est obtenu avec λ proche de 2a, de préférence avec λ compris entre 1,6 et 2,2 a. Des essais ont montré que la précision requise pouvait être obtenue par exemple avec une valeur de λ entre 0,5 et 1,5 millimètres, de préférence 1 millimètre.

## Revendications

**Revendications pour les Etats contractants suivants : CH, LI, ES, FR, IT**

1. Calibre électronique de précision (1) portable comportant un coulisseau (1) apte à être déplacé longitudinalement le long d'une perche (2), le coulisseau et la perche étant chacun munis d'un bec (10, respectivement 20), le coulisseau étant en outre munis de moyens électroniques (11) permettant d'afficher sur un affichage électronique (12) une indication dépendant de la distance entre lesdits becs (10, 20), lesdits moyens électroniques comprenant des moyens d'alimentation électrique autonomes (110, 111),

       caractérisé en ce que

       ladite perche (2) est munie d'une règle (21) magnétisée avec une période de magnétisation λ,

       en ce que lesdits moyens électroniques (11) comportent un seul capteur (112) muni d'un réseau de n électrodes magnétorésistives (1121) disposées en regard de ladite règle (21) en sorte que les valeurs des résistances des électrodes magnétorésistives soient une fonction de leur position longitudinale le long de la règle (21), n étant supérieur à deux,

et en ce que lesdits moyens électroniques (11) comportent en outre des moyens (112, 113) permettant de déterminer à partir des valeurs de résistance des électrodes magnétorésistives (1121) ladite indication dépendant de la distance entre lesdits becs (10, 20) et d'afficher cette indication sur ledit affichage électronique (12).

2. Calibre selon la revendication précédente, caractérisé en ce que ledit réseau d'électrodes magnétorésistives (1121) comprend au moins certains jeux (A à D') d'électrodes magnétorésistives (1121) reliées en série, et en ce que la résistance résultante de chaque jeu d'électrodes magnétorésistives est suffisante pour alimenter ledit calibre uniquement avec lesdits moyens d'alimentation électrique autonomes (110, 111).

3. Calibre selon la revendication précédente, caractérisé en ce que le nombre d'électrodes magnétorésistives (1121) reliées en série dans chaque jeu (A à D') est supérieur à 8.

4. Calibre selon la revendication précédente, caractérisé en ce que l'épaisseur des électrodes magnétorésistives est inférieure à 100nm, leur longueur comprise entre 0,1 et 10 millimètres et leur largeur inférieure à 40μm.

5. Calibre selon la revendication précédente, caractérisé en ce que les dimensions des électrodes magnétorésistives (1121), leur matériau et leur nombre par jeu sont choisis de manière à ce que la résistance résultante de chaque jeu (A à D') d'électrodes magnétorésistives soit supérieure à 10kΩ.

6. Calibre selon la revendication précédente, caractérisé en ce que les dimensions des électrodes magnétorésistives (1121), leur matériau et leur nombre par jeu sont choisis de manière à ce que la résistance résultante de chaque jeu d'électrodes magnétorésistives soit supérieure à 50kΩ.

7. Calibre selon la revendication 3, caractérisé en ce que lesdites électrodes magnétorésistives (1121) sont étalées longitudinalement sur au moins k=2 périodes λ de magnétisation de la règle.

8. Calibre selon la revendication précédente, caractérisé en ce que lesdits jeux (A à D') d'électrodes magnétorésistives (1121) sont constituées par des électrodes occupant des positions réparties entre kλ-w/2 et kλ+w/2.

9. Calibre selon la revendication 2, caractérisé en ce que lesdits jeux (A à D') d'électrodes magnétorésistives (1121) reliées en série sont connectés entre eux de manière à définir au moins un pont de mesure, et en ce que lesdits moyens électroniques (11) utilisent le ou les signaux (S, S' ; C, C') à la sortie dudit ou desdits ponts de mesure pour déterminer la distance entre lesdits becs (10, 20).

10. Calibre selon la revendication précédente, caractérisé en ce que le nombre d'électrodes magnétorésistives (1121) par jeu (A à D') est supérieur à 8.

11. Calibre selon la revendication précédente, caractérisé en ce que l'épaisseur des électrodes magnétorésistives est inférieure à 100nm, leur longueur supérieure à 0,1mm et leur largeur inférieure à 40μm.

12. Calibre selon la revendication précédente, caractérisé en ce que les dimensions des électrodes magnétorésistives (1121), leur matériau et leur nombre par jeu sont choisis de manière à ce que la résistance résultante de chaque jeu (A à D') d'électrodes magnétorésistives soit supérieure à 10kΩ.

13. Calibre selon la revendication précédente, caractérisé en ce que les dimensions des électrodes magnétorésistives, leur matériau et leur nombre par jeu sont choisis de manière à ce que la résistance résultante de chaque jeu d'électrodes magnétorésistives soit supérieure à 50kΩ.

14. Calibre selon la revendication 8, caractérisé en ce que lesdits jeux (A à D') d'électrodes reliées en série sont connectés entre eux de manière à définir deux ponts de mesure, et en ce que lesdits moyens électroniques (11) utilisent les signaux à la sortie desdits ponts de mesure pour déterminer la distance entre lesdits becs (10, 20).

15. Calibre selon la revendication précédente, caractérisé en ce que les électrodes magnétorésistives (1121) constituant le second pont de mesure sont déphasées de λ/4 par rapport aux électrodes magnétorésistives constituant le premier pont de mesure, en sorte que les signaux (S, S' ;C, C') à la sortie des deux ponts sont déphasés de 90°.

16. Calibre selon la revendication précédente, caractérisé en ce que lesdites électrodes magnétorésistives (1121) sont réparties longitudinalement de manière à constituer x groupes (1120) d'électrodes magnétorésistives, lesdits groupes étant espacés de λ/4 et comportant au moins deux électrodes magnétorésistives (1121) du même jeu (A à D') reliées en série.

17. Calibre selon l'une des revendications 1 à 7, caractérisé en ce que la distance (a) entre la règle magnétique (21) et les électrodes magnétorésistives (1121) est comprise dans l'intervalle de 0,2 à 0,7 millimètre, et en ce que la période de règle est comprise dans l'intervalle de 0,5 à 1,5 millimètre.

18. Calibre selon la revendication précédente, caractérisé en ce que lesdites électrodes magnétorésistives sont étalées longitudinalement sur au moins k=2 périodes λ de magnétisation de la règle.

19. Calibre selon la revendication précédente, caractérisé en ce que lesdites électrodes magnétorésistives sont étalées longitudinalement sur au moins 3 millimètres.

20. Calibre selon l'une des revendications 1 à 16, caractérisé en ce que au moins certaines électrodes magnétorésistives (1121) comportent des structures de barberpoles.

21. Calibre selon la revendication précédente, caractérisé en ce que lesdites électrodes magnétorésistives (1121) comportent des structures de barberpoles avec plusieurs orientations différentes.

22. Calibre selon la revendication 9, caractérisé en ce que ledit capteur (112) comprend en outre au moins une résistance d'équilibrage du ou desdits ponts de mesure, dont la valeur peut être ajustée par laser au cours de la fabrication de manière à équilibrer ledit pont de mesure lorsqu'aucun champ magnétique n'est appliqué.

23. Calibre selon l'une des revendications précédentes, caractérisé en ce que lesdits moyens électroniques (11) sont disposés sur une plaque de circuit imprimé (115), et en ce que ledit capteur magnétorésistif (112) est disposé sur la face du circuit imprimé (115) face à ladite règle (21).

24. Calibre selon la revendication précédente, caractérisé en ce que lesdits moyens électroniques (11) comprennent un aimant permanent (114) disposé sur la face du circuit imprimé opposée à la règle (21), à proximité desdites électrodes magnétorésistives (1121), afin de modifier la direction et l'amplitude du champ magnétique résultant sur lesdites électrodes magnétorésistives (1121).

25. Calibre selon la revendication précédente, caractérisé en ce que ledit capteur magnétorésistif (112) est couvert d'une couche synthétique protectrice (116) face à ladite règle (21).

26. Calibre selon la revendication 24, caractérisé en ce que ledit coulisseau (1) est en métal, en ce que ladite plaque de circuit imprimé (115) est fixée directement sur ledit coulisseau de manière à ce que les électrodes magnétorésistives dudit capteur magnétorésistif (112) se trouvent à une distance prédéterminée (a) de la règle (2), en ce que le coulisseau est en outre muni d'un revêtement antichoc (117) en matériau synthétique pardessus ledit circuit imprimé, une fenêtre étant ménagée à travers ledit revêtement antichoc (117) pour y loger ledit affichage électronique.

27. Calibre selon l'une des revendications 1 à 16, caractérisé en ce que lesdits moyens électroniques (11) comportent en outre un accumulateur (110) et une génératrice linéaire (111), le déplacement dudit coulisseau le long de ladite règle magnétique (21) générant un courant dans ladite génératrice linéaire (11), ledit courant étant utilisé pour recharger ledit accumulateur (110), ledit accumulateur alimentant lesdits moyens électroniques (11).

28. Calibre selon l'une des revendications 1 à 16, caractérisé en ce que ladite perche (2) et ledit coulisseau (1) sont en aluminium tandis que ladite règle est en acier.

29. Calibre selon la revendication 28, caractérisé en ce que ladite règle (21) est recouverte d'une couche de protection non magnétique (22).

30. Calibre selon la revendication précédente, caractérisé en ce que ladite couche de protection (22) est munie d'une impression (220) indiquant de manière au moins approximative la position du coulisseau (1) le long de la perche (2).

31. Calibre selon la revendication 1, caractérisé en ce que ledit réseau d'électrodes magnétorésistives (1121) comprend au moins certains jeux (A à D') d'électrodes magnétorésistives (1121) constitués chacun d'au moins 8 électrodes reliées en série, l'épaisseur des électrodes magnétorésistives (1121) étant inférieure à 100nm, leur longueur comprise entre 0,1 et 10 millimètres et leur largeur inférieure à 40µm, de manière à ce que la résistance résultante de chaque jeu d'électrodes magnétorésistives (A à D') soit supérieure à 10kΩ afin de pouvoir alimenter ledit calibre uniquement avec lesdits moyens d'alimentation électrique autonomes (110, 111).

32. Calibre selon la revendication précédente, caractérisé en ce que lesdites électrodes magnétorésistives (1121) sont étalées sur au moins deux périodes λ de magnétisation de la règle,

en ce que la résistance résultante de chaque jeu d'électrodes (A à D') est supérieure à 50kΩ,

en ce que lesdits jeux (A à D') d'électrodes magnétorésistives (1121) reliées en série sont connectés entre eux de manière à définir deux. ponts de mesure,

et en ce que lesdits moyens électroniques utilisent les signaux (S, S'; C, C') à la sortie desdits ponts de mesure pour déterminer la distance entre lesdits becs (10, 20).

**33.** Calibre selon la revendication précédente, caractérisé en ce que lesdites électrodes magnétorésistives sont réparties longitudinalement de manière à constituer x groupes (1120) d'électrodes magnétorésistives (1121), lesdits groupes étant espacés de λ/4 et comportant au moins deux électrodes magnétorésistives du même jeu et reliées en série,

et en ce que les électrodes magnétorésistives (1121) constituant le second pont de mesure sont déphasées de λ/4 par rapport aux électrodes magnétorésistives (1121) constituant le premier pont de mesure, en sorte que les signaux à la sortie des deux ponts sont déphasés de λ/4.

**34.** Calibre selon la revendication 31, caractérisé en ce que la distance (a) entre la règle magnétique (21) et les électrodes magnétorésistives est comprise dans l'intervalle de 0,2 à 0,7 millimètre,

en ce que la période λ de magnétisation de la règle est comprise entre 0,5 et 1,5 millimètres,

et en ce que lesdites électrodes magnétorésistives (1121) sont étalées longitudinalement sur une longueur supérieure ou égale à k=2 périodes λ de magnétisation de la règle et supérieure ou égale à 3 millimètres.

**35.** Calibre selon la revendication 31, caractérisé en ce que au moins certaines électrodes magnétorésistives (1121) comportent des structures de barberpole avec plusieurs orientations différentes.

**Revendications pour les Etats contractants suivants : DE, GB**

**1.** Calibre électronique de précision (1) portable comportant un coulisseau (1) apte à être déplacé longitudinalement le long d'une perche (2), le coulisseau et la perche étant chacun munis d'un bec (10, respectivement 20), le coulisseau étant en outre munis de moyens électroniques (11) permettant d'afficher sur un affichage électronique (12) une indication dépendant de la distance entre lesdits becs (10, 20), lesdits moyens électroniques comprenant des moyens d'alimentation électrique autonomes (110, 111),

ladite perche (2) étant munie d'une règle (21) magnétisée avec une période de magnétisation λ,

lesdits moyens électroniques (11) comportant un seul capteur (112) muni d'un réseau de n électrodes magnétorésistives (1121) disposées en regard de ladite règle (21) en sorte que les valeurs des résistances des électrodes magnétorésistives soient une fonction de leur position longitudinale le long de la règle (21), n étant supérieur à deux, ledit réseau d'électrodes magnétorésistives (1121) comprenant au moins certains jeux (A à D') d'électrodes magnétorésistives (1121) reliées en série,

lesdits moyens électroniques (11) comportant en outre des moyens (112, 113) permettant de déterminer à partir des valeurs de résistance des électrodes magnétorésistives (1121) ladite indication dépendant de la distance entre lesdits becs (10, 20) et d'afficher cette indication sur ledit affichage électronique (12),

caractérisé en ce que lesdits jeux sont connectés entre eux de manière à définir au moins deux ponts de mesure,

et en ce que lesdits moyens électroniques (11) utilisent les signaux à la sortie desdits au moins deux ponts de mesure pour déterminer la distance entre lesdits becs (10, 20).

**2.** Calibre selon la revendication précédente, caractérisé en ce que le nombre d'électrodes magnétorésistives (1121) reliées en série dans chaque jeu (A à D') est supérieur à 8.

**3.** Calibre selon la revendication précédente, caractérisé en ce que l'épaisseur des électrodes magnétorésistives est inférieure à 100nm, leur longueur comprise entre 0,1 et 10 millimètres et leur largeur inférieure à 40μm.

**4.** Calibre selon la revendication précédente, caractérisé en ce que les dimensions des électrodes magnétorésistives (1121), leur matériau et leur nombre par jeu sont choisis de manière à ce que la résistance résultante de chaque jeu (A à D') d'électrodes magnétorésistives soit supérieure à 10kΩ.

**5.** Calibre selon la revendication précédente, caractérisé en ce que les dimensions des électrodes magnétorésistives (1121), leur matériau et leur nombre par jeu sont choisis de manière à ce que la résistance résultante de chaque jeu d'électrodes magnétorésistives soit supérieure à 50kΩ.

6. , Calibre selon la revendication 1, caractérisé en ce que lesdites électrodes magnétorésistives (1121) sont étalées longitudinalement sur au moins k=2 périodes λ de magnétisation de la règle.

7. Calibre selon la revendication précédente, caractérisé en ce que lesdits jeux (A à D') d'électrodes magnétorésistives (1121) sont constituées par des électrodes occupant des positions réparties entre kλ-w/2 et kλ+w/2,

8. Calibre selon la revendication 1, caractérisé en ce que les électrodes magnétorésistives (1121) constituant le second pont de mesure sont déphasées de λ/4 par rapport aux électrodes magnétorésistives constituant le premier pont de mesure, en sorte que les signaux (S, S' ; C, C') à la sortie des deux ponts sont déphasés de 90°.

9. Calibre selon la revendication précédente, caractérisé en ce que lesdites électrodes magnétorésistives (1121) sont réparties longitudinalement de manière à constituer x groupes (1120) d'électrodes magnétorésistives, lesdits groupes étant espacés de λ/4 et comportant au moins deux électrodes magnétorésistives (1121) du même jeu (A à D') reliées en série.

10. Calibre selon l'une des revendications 1 à 9, caractérisé en ce que la distance (a) entre la règle magnétique (21) et les électrodes magnétorésistives (1121) est comprise dans l'intervalle de 0,2 à 0,7 millimètre, et en ce que la période de règle est comprise dans l'intervalle de 0,5 à 1,5 millimètre.

11. Calibre selon la revendication précédente, caractérisé en ce que lesdites électrodes magnétorésistives sont étalées longitudinalement sur au moins k=2 périodes λ de magnétisation de la règle.

12. Calibre selon la revendication précédente, caractérisé en ce que lesdites électrodes magnétorésistives sont étalées longitudinalement sur au moins 3 millimètres.

13. Calibre selon l'une des revendications 36 à 47, caractérisé en ce que au moins certaines électrodes magnétorésistives (1121) comportent des structures de barberpoles.

14. Calibre selon la revendication précédente, caractérisé en ce que lesdites électrodes magnétorésistives (1121) comportent des structures de barberpoles avec plusieurs orientations différentes.

15. Calibre selon la revendication 1, caractérisé en ce que ledit capteur (112) comprend en outre au moins une résistance d'équilibrage du ou desdits ponts de mesure, dont la valeur peut être ajustée par laser au cours de la fabrication de manière à équilibrer ledit pont de mesure lorsqu'aucun champ magnétique n'est appliqué.

16. Calibre selon l'une des revendications précédentes, caractérisé en ce que lesdits moyens électroniques (11) sont disposés sur une plaque de circuit imprimé (115), et en ce que ledit capteur magnétorésistif (112) est disposé sur la face du circuit imprimé (115) face à ladite règle (21).

17. Calibre selon la revendication précédente, caractérisé en ce que lesdits moyens électroniques (11) comprennent un aimant permanent (114) disposé sur la face du circuit imprimé opposée à la règle (21), à proximité desdites électrodes magnétorésistives (1121), afin de modifier la direction et l'amplitude du champ magnétique résultant sur lesdites électrodes magnétorésistives (1121).

18. Calibre selon la revendication précédente, caractérisé en ce que ledit capteur magnétorésistif (112) est couvert d'une couche synthétique protectrice (116) face à ladite règle (21).

19. Calibre selon la revendication 17, caractérisé en ce que ledit coulisseau (1) est en métal, en ce que ladite plaque de circuit imprimé (115) est fixée directement sur ledit coulisseau de manière à ce que les électrodes magnétorésistives dudit capteur magnétorésistif (112) se trouvent à une distance prédéterminée (a) de la règle (2), en ce que le coulisseau est en outre muni d'un revêtement antichoc (117) en matériau synthétique pardessus ledit circuit imprimé, une fenêtre étant ménagée à travers ledit revêtement antichoc (117) pour y loger ledit affichage électronique.

20. Calibre selon l'une des revendication précédentes, caractérisé en ce que lesdits moyens électroniques (11) comportent en outre un accumulateur (110) et une génératrice linéaire (111), le déplacement dudit coulisseau le long de ladite règle magnétique (21) générant un courant dans ladite génératrice linéaire (11), ledit courant étant utilisé pour recharger ledit accumulateur (110), ledit accumulateur alimentant lesdits moyens électroniques (11).

21. Calibre selon l'une des revendications précédentes, caractérisé en ce que ladite perche (2) et ledit coulisseau (1) sont en aluminium tandis que ladite règle est en acier.

**22.** Calibre selon la revendication précédente, caractérisé en ce que ladite règle (21) est recouverte d'une couche de protection non magnétique (22).

**23.** Calibre selon la revendication précédente, caractérisé en ce que ladite couche de protection (22) est munie d'une impression (220) indiquant de manière au moins approximative la position du coulisseau (1) le long de la perche (2).

**24.** Calibre selon la revendication 1, caractérisé en ce que ledit réseau d'électrodes magnétorésistives (1121) comprend au moins certains jeux (A à D') d'électrodes magnétorésistives (1121) constitués chacun d'au moins 8 électrodes reliées en série, l'épaisseur des électrodes magnétorésistives (1121) étant inférieure à 100nm, leur longueur comprise entre 0,1 et 10 millimètres et leur largeur inférieure à 40µm, de manière à ce que la résistance résultante de chaque jeu d'électrodes magnétorésistives (A à D') soit supérieure à 10kΩ afin de pouvoir alimenter ledit calibre uniquement avec lesdits moyens d'alimentation électrique autonomes (110, 111).

**Patentansprüche**

**Patentansprüche für folgende Vertragsstaaten : CH, LI, ES, FR, IT**

**1.** Tragbare elektronische Präzisionsschieblehre (1), enthaltend eine Gleitschiene (1), welche der Länge nach entlang einer Stange (2) bewegt werden kann, wobei die Gleitschiene und die Stange je mit einem Schnabel (10, bzw. 20) versehen sind, wobei die Gleitschiene ausserdem mit elektronischen Mitteln (11) versehen ist, welche es erlauben, eine von der Distanz zwischen besagten Schnäbeln (10, 20) abhängige Angabe auf einer elektronischen Anzeige (12) anzuzeigen, wobei besagte elektronische Mittel selbständige elektrische Speisungsmittel (110, 111) enthalten, dadurch gekennzeichnet,

dass besagte Stange (2) mit einem Lineal (21) versehen ist, welches mit einer Magnetisierungsperiode λ magnetisiert ist,

dass besagte elektronische Mittel (11) einen einzigen Sensor (112) enthalten, welcher mit einem Netzwerk von n magnetoresistiven Elektroden (1121) versehen ist, die gegenüber besagtem Lineal (21) angeordnet sind, so dass die Widerstandswerte der magnetoresistiven Elektroden eine Funktion ihrer Längsposition entlang dem Lineal (21) sind, wobei n grösser als zwei ist,

und dass besagte elektronische Mittel (11) ausserdem Mittel (112, 113) enthalten, welche es erlauben, besagte von der Distanz zwischen besagten Schnäbeln (10, 20) abhängige Angabe aufgrund der Widerstandswerte der magnetoresistiven Elektroden (1121) zu berechnen und diese Angabe auf besagter elektronischer Anzeige (12) anzuzeigen.

**2.** Schieblehre gemäss dem vorhergehenden Anspruch, dadurch gekennzeichnet, dass besagtes Netzwerk von magnetoresistiven Elektroden (1121) mindestens gewisse Sätze (A bis D') von seriell verbundenen magnetoresistiven Elektroden (1121) enthält, und dass der resultierende Widerstand jedes Satzes von magnetoresistiven Elektroden genügt, um besagte Schieblehre nur mit besagten selbständigen elektrischen Speisungsmitteln (110, 111) zu speisen.

**3.** Schieblehre gemäss dem vorhergehenden Anspruch, dadurch gekennzeichnet, dass die Anzahl der seriell verbundenen magnetoresistiven Elektroden (1121) in jedem Satz (A bis D') grösser als 8 ist.

**4.** Schieblehre gemäss dem vorhergehenden Anspruch, dadurch gekennzeichnet, dass die Dicke der magnetoresistiven Elektroden kleiner als 100 nm ist, deren Länge zwischen 0,1 und 10 Millimeter liegt und deren Breite kleiner als 40 µm ist.

**5.** Schieblehre gemäss dem vorhergehenden Anspruch, dadurch gekennzeichnet, dass die Dimensionen der magnetoresistiven Elektroden (1121), deren Material und deren Anzahl pro Satz so gewählt werden, dass der resultierende Widerstand jedes Satzes (A bis D') von magnetoresistiven Elektroden grösser als 10 kΩ ist.

**6.** Schieblehre gemäss dem vorhergehenden Anspruch, dadurch gekennzeichnet, dass die Dimensionen der magnetoresistiven Elektroden (1121), deren Material und deren Anzahl pro Satz so gewählt werden, dass der resultierende Widerstand jedes Satzes (A bis D') von magnetoresistiven Elektroden grösser als 50 kΩ ist.

**7.** Schieblehre gemäss Anspruch 3, dadurch gekennzeichnet, dass besagte magnetoresistive Elektroden (1121) längs auf mindestens k=2 Magnetisierungsperioden λ des Lineals ausgebreitet sind.

**8.** Schieblehre gemäss dem vorhergehenden Anspruch, dadurch gekennzeichnet, dass besagte Sätze (A bis D') von magnetoresistiven Elektroden (1121) aus Elektroden bestehen, die zwischen kλ-w/2 und kλ+w/2 verteilte Positionen besetzen.

9. Schieblehre gemäss Anspruch 2, dadurch gekennzeichnet, dass besagte Sätze (A bis D') von seriell verbundenen magnetoresistiven Elektroden (1121) so miteinander verbunden sind, dass sie mindestens eine Messbrücke definieren, und dadurch, dass besagte elektronische Mittel (11) das Signal oder die Signale (S, S'; C, C') am Ausgang besagter Messbrücke oder -brücken benützen, um die Distanz zwischen besagten Schnäbeln (10, 20) zu ermitteln.

10. Schieblehre gemäss dem vorhergehenden Anspruch, dadurch gekennzeichnet, dass die Anzahl von magnetoresistiven Elektroden (1121) pro Satz (A bis D') grösser als 8 ist.

11. Schieblehre gemäss dem vorhergehenden Anspruch, dadurch gekennzeichnet, dass die Dicke der magnetoresistiven Elektroden kleiner als 100 nm, deren Länge grösser als 0,1 Millimeter und deren Breite kleiner als 40 μm ist.

12. Schieblehre gemäss dem vorhergehenden Anspruch, dadurch gekennzeichnet, dass die Dimensionen der magnetoresistiven Elektroden (1121), deren Material und deren Anzahl pro Satz so gewählt werden, dass der resultierende Widerstand jedes Satzes (A bis D') von magnetoresistiven Elektroden grösser als 10 kΩ ist.

13. Schieblehre gemäss dem vorhergehenden Anspruch, dadurch gekennzeichnet, dass die Dimensionen der magnetoresistiven Elektroden (1121), deren Material und deren Anzahl pro Satz so gewählt werden, dass der resultierende Widerstand jedes Satzes (A bis D') von magnetoresistiven Elektroden grösser als 50 kΩ ist.

14. Schieblehre gemäss Anspruch 8, dadurch gekennzeichnet, dass besagte Sätze (A bis D') von seriell verbundenen magnetoresistiven Elektroden (1121) so miteinander verbunden sind, dass sie zwei Messbrücken definieren, und dadurch, dass besagte elektronische Mittel (11) die Signale am Ausgang besagter Messbrücken benützen, um die Distanz zwischen besagten Schnäbeln (10, 20) zu ermitteln.

15. Schieblehre gemäss dem vorhergehenden Anspruch, dadurch gekennzeichnet, dass die magnetoresistiven Elektroden (1121), welche die zweite Messbrücke bilden, um λ/4 in Bezug auf die magnetoresistiven Elektroden, welche die erste Messbrücke bilden, phasenverschoben sind, so dass die Signale (S, S'; C, C') am Ausgang beider Brücken um 90° phasenverschoben sind.

16. Schieblehre gemäss dem vorhergehenden Anspruch, dadurch gekennzeichnet, dass besagte magnetoresistive Elektroden (1121) so längs verteilt sind, dass sie x Gruppen (1120) von magnetoresistiven Elektroden bilden, wobei besagte Gruppen um λ/4 auseinander liegen und mindestens zwei seriell verbundene magnetoresistive Elektroden (1121) des gleichen Satzes (A bis D') enthalten.

17. Schieblehre gemäss einem der Ansprüche 1 bis 7, dadurch gekennzeichnet, dass die Distanz (a) zwischen dem magnetischen Lineal (21) und den magnetoresistiven Elektroden (1121) im Intervall zwischen 0,2 und 0,7 Millimeter liegt, und dass die Linealperiode im Intervall zwischen 0,5 und 1,5 Millimeter liegt.

18. Schieblehre gemäss dem vorhergehenden Anspruch, dadurch gekennzeichnet, dass besagte magnetoresistive Elektroden längs über mindestens k=2 Magnetisierungsperioden λ des Lineals ausgebreitet sind.

19. Schieblehre gemäss dem vorhergehenden Anspruch, dadurch gekennzeichnet, dass die magnetoresistiven Elektroden längs über mindestens 3 Millimeter ausgebreitet sind.

20. Schieblehre gemäss einem der Ansprüche 1 bis 16, dadurch gekennzeichnet, dass mindestens gewisse magnetoresistive Elektroden (1121) Barberpole-Strukturen besitzen.

21. Schieblehre gemäss dem vorhergehenden Anspruch, dadurch gekennzeichnet, dass besagte magnetoresistive Elektroden (1121) Barberpole-Strukturen mit mehreren verschiedenen Ausrichtungen besitzen.

22. Schieblehre gemäss Anspruch 9, dadurch gekennzeichnet, dass besagter Sensor (112) ausserdem mindestens einen Kompensationswiderstand besagter Messbrücke oder -brücken enthält, dessen Wert mit Laser während der Fabrikation angepasst werden kann, um besagte Messbrücke auszugleichen, wenn kein magnetisches Feld zugeführt wird.

23. Schieblehre gemäss einem der vorhergehenden Ansprüche, dadurch gekennzeichnet, dass besagte elektronische Mittel (11) auf einem gedruckten Schaltkreis (115) angebracht sind, und dass besagter magnetoresistiver Sensor (112) auf der Seite des gedruckten Schaltkreises (115) gegenüber besagtem Lineal (21) angebracht ist.

24. Schieblehre gemäss dem vorhergehenden Anspruch, dadurch gekennzeichnet, dass besagte elektronische Mittel (11) einen auf der Seite des gedruckten Schaltkreises gegenüber dem Lineal (21) angebrachten Dauermagneten (114) enthalten, in der Nähe besagter magnetoresistiver Elektroden (1121), um die Richtung und Breite des resultierenden magnetischen Feldes auf besagten magnetoresistiven Elektroden (1121) zu ändern.

25. Schieblehre gemäss dem vorhergehenden Anspruch, dadurch gekennzeichnet, dass besagter magnetoresistiver Sensor (112) mit einer synthetischen Schutzschicht (116) gegenüber besagtem Lineal (21) überzogen ist.

26. Schieblehre gemäss Anspruch 24, dadurch gekennzeichnet, dass besagte Gleitschiene (1) aus Metall ist, dass besagter gedruckter Schaltkreis (115) direkt auf besagter Gleitschiene fixiert ist, so dass die magnetoresistiven Elektroden besagtes magnetoresistiven Sensors (112) in einer vorgegebenen Distanz (a) zum Lineal (2) liegen, dadurch, dass die Gleitschiene ausserdem mit einer synthetischen stossfesten Beschichtung (117) versehen ist, wobei eine Öffnung durch besagte stossfeste Beschichtung (117) vorgesehen ist, um besagte elektronische Anzeige unterzubringen.

27. Schieblehre gemäss einem der Ansprüche 1 bis 16, dadurch gekennzeichnet, dass besagte elektronische Mittel (11) ausserdem einen Akkumulator (110) und einen Lineargenerator (111) enthalten, wobei die Bewegung besagter Gleitschiene entlang besagtem magnetischen Lineal (21) einen Stromfluss in besagtem Lineargenerator (111) erzeugt, wobei besagter Stromfluss zum Wiederaufladen besagtes Akkumulators (110) gebraucht wird, wobei besagter Akkumulator besagte elektronische Mittel (11) speist.

28. Schieblehre gemäss einem der Ansprüche 1 bis 16, dadurch gekennzeichnet, dass besagte Stange (2) und besagte Gleitschiene (1) aus Aluminium bestehen, wo hingegen besagtes Lineal aus Stahl besteht.

29. Schieblehre gemäss Anspruch 28, dadurch gekennzeichnet, dass besagtes Lineal (21) mit einer nichtmagnetischen Schutzschicht (22) überzogen ist.

30. Schieblehre gemäss dem vorhergehenden Anspruch, dadurch gekennzeichnet, dass besagte Schutzschicht (22) mit einem Eindruck (220) versehen ist, welcher mindestens ungefähr die Position der Gleitschiene (1) entlang der Stange (2) angibt.

31. Schieblehre gemäss Anspruch 1, dadurch gekennzeichnet, dass besagtes Netzwerk von magnetoresistiven Elektroden (1121) mindestens gewisse je aus mindestens 8 seriell verbundenen Elektroden bestehende Sätze (A bis D') von magnetoresistiven Elektroden (1121) enthält, wobei die Dicke der magnetoresistiven Elektroden (1121) kleiner als 100 nm ist, deren Länge zwischen 0,1 und 10 Millimeter liegt und deren Breite kleiner als 40 µm ist, so dass der resultierende Widerstand jedes Satzes (A bis D') von magnetoresistiven Elektroden grösser als 10 kΩ ist, um besagte Schieblehre nur mit besagten selbständigen elektrischen Speisungsmitteln (110, 111) speisen zu können.

32. Schieblehre gemäss dem vorhergehenden Anspruch, dadurch gekennzeichnet, dass besagte magnetoresistive Elektroden (1121) über mindestens zwei Magnetisierungsperioden λ des Lineals ausgebreitet sind,

dadurch, dass der resultierende Widerstand jedes Elektrodensatzes (A bis D') grösser als 50 kΩ ist,

dadurch, dass besagte Sätze (A bis D') von seriell verbundenen magnetoresistiven Elektroden (1121) so miteinander verbunden sind, dass sie zwei Messbrücken definieren,

und dadurch, dass besagte elektronische Mittel die Signale (S, S'; C, C') am Ausgang besagter Messbrücken benützen, um die Distanz zwischen den Schnäbeln (10, 20) zu ermitteln.

33. Schieblehre gemäss dem vorhergehenden Anspruch, dadurch gekennzeichnet, dass besagte magnetoresistive Elektroden längs verteilt sind, so dass sie x Gruppen (1120) von magnetoresistiven Elektroden (1121) bilden, wobei besagte Gruppen um λ/4 auseinander liegen und mindestens zwei seriell verbundene magnetoresistive Elektroden (1121) des gleichen Satzes enthalten, und dadurch, dass die magnetoresistiven Elektroden (1121), welche die zweite Messbrücke bilden, um λ/4 in Bezug auf die magnetoresistiven Elektroden, welche die erste Messbrücke bilden, phasenverschoben sind, so dass die Signale am Ausgang beider Brücken um λ/4 phasenverschoben sind.

34. Schieblehre gemäss Anspruch 31, dadurch gekennzeichnet, dass die Distanz (a) zwischen dem magnetischen Lineal (21) und den magnetoresistiven Elektroden im Intervall zwischen 0,2 und 0,7 Millimeter liegt, dadurch, dass die Magnetisierungsperiode λ des Lineals zwischen 0,5 und 1,5 Millimeter liegt, und dadurch, dass besagte magnetoresistive Elektroden (1121) längs über eine Länge grösser als oder gleich k=2 Magnetisierungsperioden λ des Lineals und grösser als oder gleich 3 Millimeter ausgebreitet sind.

35. Schieblehre gemäss Anspruch 31, dadurch gekennzeichnet, dass mindestens gewisse magnetoresistive Elektroden (1121) Barberpole-Strukturen mit mehreren verschiedenen Ausrichtungen besitzen.

**Patentansprüche für folgende Vertragsstaaten : GB, DE**

1. Tragbare elektronische Präzisionsschieblehre (1), enthaltend eine Gleitschiene (1), welche der Länge nach entlang einer Stange (2) bewegt werden kann, wobei die Gleitschiene und die Stange je mit einem Schnabel (10, bzw. 20) versehen sind, wobei die Gleitschiene ausserdem mit elektronischen Mitteln (11) versehen ist, welche es erlauben, eine von der Distanz zwischen besagten Schnäbeln (10, 20) abhängige Angabe auf einer elektronischen Anzeige (12) anzuzeigen, wobei besagte elektronische Mittel selbständige elektrische Speisungsmittel (110, 111) enthalten,

   wobei besagte Stange (2) mit einem Lineal (21) versehen ist, welches mit einer Magnetisierungsperiode λ magnetisiert ist,

   wobei besagte elektronische Mittel (11) einen einzigen Sensor (112) enthalten, welcher mit einem Netzwerk von n magnetoresistiven Elektroden (1121) versehen ist, die gegenüber besagtem Lineal (21) angeordnet sind, so dass die Widerstandswerte der magnetoresistiven Elektroden eine Funktion ihrer Längsposition entlang dem Lineal (21) sind, wobei n grösser als zwei ist, wobei besagtes Netzwerk von magnetoresistiven Elektroden (1121) mindestens gewisse Sätze (A bis D') von seriell verbundenen magnetoresistiven Elektroden (1121) enthält,

   wobei besagte elektronische Mittel (11) ausserdem Mittel (112, 113) enthalten, welche es erlauben, besagte von der Distanz zwischen besagten Schnäbeln (10, 20) abhängige Angabe aufgrund der Widerstandswerte der magnetoresistiven Elektroden (1121) zu berechnen und diese Angabe auf besagter elektronischer Anzeige (12) anzuzeigen,

   dadurch gekennzeichnet, dass besagte Sätze so miteinander verbunden sind, dass sie mindestens zwei Messbrücken definieren, und dadurch, dass besagte elektronische Mittel (11) die Signale am Ausgang besagter mindestens zwei Messbrücken benützen, um die Distanz zwischen besagten Schnäbeln (10, 20) zu ermitteln.

2. Schieblehre gemäss dem vorhergehenden Anspruch, dadurch gekennzeichnet, dass die Anzahl der seriell verbundenen magnetoresistiven Elektroden (1121) in jedem Satz (A bis D') grösser als 8 ist.

3. Schieblehre gemäss dem vorhergehenden Anspruch, dadurch gekennzeichnet, dass die Dicke der magnetoresistiven Elektroden kleiner als 100 nm ist, deren Länge zwischen 0,1 und 10 Millimeter liegt und deren Breite kleiner als 40 μm ist.

4. Schieblehre gemäss dem vorhergehenden Anspruch, dadurch gekennzeichnet, dass die Dimensionen der magnetoresistiven Elektroden (1121), deren Material und deren Anzahl pro Satz so gewählt werden, dass der resultierende Widerstand jedes Satzes (A bis D') von magnetoresistiven Elektroden grösser als 10 kΩ ist.

5. Schieblehre gemäss dem vorhergehenden Anspruch, dadurch gekennzeichnet, dass die Dimensionen der magnetoresistiven Elektroden (1121), deren Material und deren Anzahl pro Satz so gewählt werden, dass der resultierende Widerstand jedes Satzes (A bis D') von magnetoresistiven Elektroden grösser als 50 kΩ ist.

6. Schieblehre gemäss Anspruch 1, dadurch gekennzeichnet, dass besagte magnetoresistive Elektroden (1121) längs auf mindestens k=2 Magnetisierungsperioden λ des Lineals ausgebreitet sind.

7. Schieblehre gemäss dem vorhergehenden Anspruch, dadurch gekennzeichnet, dass besagte Sätze (A bis D') von magnetoresistiven Elektroden (1121) aus Elektroden bestehen, die zwischen kλ−w/2 und kλ+w/2 verteilte Positionen besetzen.

8. Schieblehre gemäss Anspruch 1, dadurch gekennzeichnet, dass die magnetoresistiven Elektroden (1121), welche die zweite Messbrücke bilden, um λ/4 in Bezug auf die magnetoresistiven Elektroden, welche die erste Messbrücke bilden, phasenverschoben sind, so dass die Signale (S, S'; C, C') am Ausgang beider Brücken um 90° phasenverschoben sind.

9. Schieblehre gemäss dem vorhergehenden Anspruch, dadurch gekennzeichnet, dass besagte magnetoresistive Elektroden (1121) so längs verteilt sind, dass sie x Gruppen (1120) von magnetoresistiven Elektroden bilden, wobei besagte Gruppen um λ/4 auseinander liegen und mindestens zwei seriell verbundene magnetoresistive Elektroden (1121) des gleichen Satzes (A bis D') enthalten.

**10.** Schieblehre gemäss einem der Ansprüche 1 bis 9, dadurch gekennzeichnet, dass die Distanz (a) zwischen dem magnetischen Lineal (21) und den magnetoresistiven Elektroden (1121) im Intervall zwischen 0,2 und 0,7 Millimeter liegt, und dass die Linealperiode im Intervall zwischen 0,5 und 1,5 Millimeter liegt.

**11.** Schieblehre gemäss dem vorhergehenden Anspruch, dadurch gekennzeichnet, dass besagte magnetoresistive Elektroden längs über mindestens k=2 Magnetisierungsperioden X des Lineals ausgebreitet sind.

**12.** Schieblehre gemäss dem vorhergehenden Anspruch, dadurch gekennzeichnet, dass die magnetoresistiven Elektroden längs über mindestens 3 Millimeter ausgebreitet sind.

**13.** Schieblehre gemäss einem der Ansprüche 36 bis 47, dadurch gekennzeichnet, dass mindestens gewisse magnetoresistive Elektroden (1121) Barberpole-Strukturen besitzen.

**14.** Schieblehre gemäss dem vorhergehenden Anspruch, dadurch gekennzeichnet, dass besagte magnetoresistive Elektroden (1121) Barberpole-Strukturen mit mehreren verschiedenen Ausrichtungen besitzen.

**15.** Schieblehre gemäss Anspruch 1, dadurch gekennzeichnet, dass besagter Sensor (112) ausserdem mindestens einen Kompensationswiderstand besagter Messbrücke oder -brücken enthält, dessen Wert mit Laser während der Fabrikation angepasst werden kann, um besagte Messbrücke auszugleichen, wenn kein magnetisches Feld zugeführt wird.

**16.** Schieblehre gemäss einem der vorhergehenden Ansprüche, dadurch gekennzeichnet, dass besagte elektronische Mittel (11) auf einem gedruckten Schaltkreis (115) angebracht sind, und dass besagter magnetoresistiver Sensor (112) auf der Seite des gedruckten Schaltkreises (115) gegenüber besagtem Lineal (21) angebracht ist.

**17.** Schieblehre gemäss dem vorhergehenden Anspruch, dadurch gekennzeichnet, dass besagte elektronische Mittel (11) einen auf der Seite des gedruckten Schaltkreises gegenüber dem Lineal (21) angebrachten Dauermagneten (114) enthalten, in der Nähe besagter magnetoresistiver Elektroden (1121), um die Richtung und Breite des resultierenden magnetischen Feldes auf besagten magnetoresistiven Elektroden (1121) zu ändern.

**18.** Schieblehre gemäss dem vorhergehenden Anspruch, dadurch gekennzeichnet, dass besagter magnetoresistiver Sensor (112) mit einer synthetischen Schutzschicht (116) gegenüber besagtem Lineal (21) überzogen ist.

**19.** Schieblehre gemäss Anspruch 17, dadurch gekennzeichnet, dass besagte Gleitschiene (1) aus Metall ist, dass besagter gedruckter Schaltkreis (115) direkt auf besagter Gleitschiene fixiert ist, so dass die magnetoresistiven Elektroden besagtes magnetoresistiven Sensors (112) in einer vorgegebenen Distanz (a) zum Lineal (2) liegen, dadurch, dass die Gleitschiene ausserdem mit einer synthetischen stossfesten Beschichtung (117) versehen ist, wobei eine Öffnung durch besagte stossfeste Beschichtung (117) vorgesehen ist, um besagte elektronische Anzeige unterzubringen.

**20.** Schieblehre gemäss einem der vorhergehenden Ansprüche, dadurch gekennzeichnet, dass besagte elektronische Mittel (11) ausserdem einen Akkumulator (110) und einen Lineargenerator (111) enthalten, wobei die Bewegung besagter Gleitschiene entlang besagtem magnetischen Lineal (21) einen Stromfluss in besagtem Lineargenerator (111) erzeugt, wobei besagter Stromfluss zum Wiederaufladen besagtes Akkumulators (110) gebraucht wird, wobei besagter Akkumulator besagte elektronische Mittel (11) speist.

**21.** Schieblehre gemäss einem der Ansprüche 1 bis 16, dadurch gekennzeichnet, dass besagte Stange (2) und besagte Gleitschiene (1) aus Aluminium bestehen, wo hingegen besagtes Lineal aus Stahl besteht.

**22.** Schieblehre gemäss Anspruch 28, dadurch gekennzeichnet, dass besagtes Lineal (21) mit einer nichtmagnetischen Schutzschicht (22) überzogen ist.

**23.** Schieblehre gemäss dem vorhergehenden Anspruch, dadurch gekennzeichnet, dass besagte Schutzschicht (22) mit einem Eindruck (220) versehen ist, welcher mindestens ungefähr die Position der Gleitschiene (1) entlang der Stange (2) angibt.

**24.** Schieblehre gemäss Anspruch 1, dadurch gekennzeichnet, dass besagtes Netzwerk von magnetoresistiven Elektroden (1121) mindestens gewisse je aus mindestens 8 seriell verbundenen Elektroden bestehende Sätze (A bis D') von magnetoresistiven Elektroden (1121) enthält, wobei die Dicke der magnetoresistiven Elektroden (1121) kleiner als 100 nm ist, deren Länge zwischen 0,1 und 10 Millimeter liegt und deren Breite kleiner als 40 um ist, so dass der resultierende Widerstand jedes Satzes (A bis D') von magnetoresistiven Elektroden grösser als 10 kΩ ist, um besagte Schieblehre nur mit besagten selbständigen elektrischen Speisungsmitteln (110, 111) speisen zu können.

## Claims

### Claims for the following Contracting States : CH, LI, ES, FR, IT

1. Portable electronic precision calliper (1) comprising a slide (1) capable of being displaced longitudinally along a rod (2), the slide and the rod being each provided with a jaw (10, respectively 20), the slide being further provided with electronic means (11) enabling an indication depending upon the distance between said jaws (10, 20) to be displayed on an electronic display (12), said electronic means comprising autonomous electric feeding means (110, 111),
characterised in that

said rod (2) is provided with a scale (21) magnetised with a period of magnetisation $\lambda$,

said electronic means (11) comprise a single sensor (112) provided with an array of n magneto-resistive electrodes (1121) disposed opposite said scale (21) so that the values of the resistances of the magneto-resistive electrodes are a function of their longitudinal position along the scale (21), n being greater than two,

and said electronic means (11) further comprise means (112, 113) capable of determining, from the resistance values of the magneto-resistive electrodes (1121), said indication depending upon the distance between said jaws (10, 20) and to display this indication on said electronic display (12).

2. Calliper according to the preceding claim, characterised in that said array of magneto-resistive electrodes (1121) comprises at least certain sets (A to D') of magneto-resistive electrodes (1121) connected in series, and in that the resulting resistance of each set of magneto-resistive electrodes is sufficient to power said calliper only with said autonomous electric feeding means (110, 111).

3. Calliper according to the preceding claim, characterised in that the number of magneto-resistive electrodes (1121) connected in series in each set (A to D') is greater than 8.

4. Calliper according to the preceding claim, characterised in that the thickness of the magneto-resistive electrodes is less than 100 nm, their length is included between 0,1 and 10 millimetres and their width is less than 40 μm.

5. Calliper according to the preceding claim, characterised in that the dimensions of the magneto-resistive electrodes (1121), their material and their number per set are chosen so that the resulting resistance of each set (A to D') of magneto-resistive electrodes is greater than 10 kΩ.

6. Calliper according to the preceding claim, characterised in that the dimensions of the magneto-resistive electrodes (1121), their material and their number per set are chosen so that the resulting resistance of each set (A to D') of magneto-resistive electrodes is greater than 50 kΩ.

7. Calliper according to claim 3, characterised in that said magneto-resistive electrodes (1121) are spread longitudinally over at least k=2 periods of magnetisation $\lambda$ of the scale.

8. Calliper according to the preceding claim, characterised in that said sets (A to D') of magneto-resistive electrodes (1121) are constituted by electrodes occupying positions spread between $k\lambda$-w/2 and $k\lambda$+w/2.

9. Calliper according to claim 2, characterised in that said sets (A to D') of magneto-resistive electrodes (1121) connected in series are interconnected so as to define at least one measuring bridge, and in that said electronic means (11) use the signal or signals (S, S'; C, C') at the output of said measuring bridge or bridges to determine the distance between said jaws (10, 20).

10. Calliper according to the preceding claim, characterised in that the number of magneto-resistive electrodes (1121) per set (A to D') is greater than 8.

11. Calliper according to the preceding claim, characterised in that the thickness of the magneto-resistive electrodes is less than 100 nm, their length greater than 0,1 mm and their width less than 40 μm.

12. Calliper according to the preceding claim, characterised in that the dimensions of the magneto-resistive electrodes (1121), their material and their number per set are chosen so that the resulting resistance of each set (A to D') of magneto-resistive electrodes is greater than 10 kΩ.

13. Calliper according to the preceding claim, characterised in that the dimensions of the magneto-resistive electrodes (1121), their material and their number per set are chosen so that the resulting resistance of each set (A to D') of magneto-resistive electrodes is greater than 50 kΩ.

14. Calliper according to claim 8, characterised in that said sets (A to D') of electrodes connected in series are interconnected so as to define two measuring bridges, and in that said electronic means (11) use the signals at the output of said measuring bridges to determine the distance between said jaws (10, 20).

15. Calliper according to the preceding claim, characterised in that the magneto-resistive electrodes (1121) constituting the second measuring bridge are dephased by λ/4 with respect to the magneto-resistive electrodes constituting the first measuring bridge, so that the signals (S, S'; C, C') at the output of the two bridges are dephased by 90°.

16. Calliper according to the preceding claim, characterised in that said magneto-resistive electrodes (1121) are distributed longitudinally so as to constitute x groups (1120) of magneto-resistive electrodes, said groups being spaced by λ/4 and comprising at least two magneto-resistive electrodes (1121) of the same set (A to D') connected in series.

17. Calliper according to one of the claims 1 to 7, characterised in that the distance (a) between the magnetised scale (21) and the magneto-resistive electrodes (1121) is included in the interval between 0,2 and 0,7 millimetres, and in that the scale period is included in the interval between 0,5 and 1,5 millimetres.

18. Calliper according to the preceding claim, characterised in that said magneto-resistive electrodes are spread longitudinally over at least k=2 periods of magnetisation λ of the scale.

19. Calliper according to the preceding claim, characterised in that said magneto-resistive electrodes are spread longitudinally over at least 3 millimetres.

20. Calliper according to one of the claims 1 to 16, characterised in that at least certain magneto-resistive electrodes (1121) have barber-pole structures.

21. Calliper according to the preceding claim, characterised in that said magneto-resistive electrodes (1121) have barber-pole structures with several different orientations.

22. Calliper according to claim 9, characterised in that said sensor (112) further comprises at least one compensation resistance of the measuring bridge or bridges, whose value can be adjusted by laser during manufacture so as to balance said measuring bridge when no magnetic field is applied.

23. Calliper according to the preceding claim, characterised in that said electronic means (11) are disposed on a printed circuit board (115), and in that said magneto-resistive sensor (112) is disposed on the side of the printed circuit (115) opposite said scale (21).

24. Calliper according to the preceding claim, characterised in that said electronic means (11) comprise a permanent magnet (114) disposed on the side of the printed circuit opposite the scale (21), close to said magneto-resistive electrodes (1121), in order to modify the direction and amplitude of the resulting magnetic field on said magneto-resistive electrodes (1121).

25. Calliper according to the preceding claim, characterised in that said magneto-resistive sensor (112) is covered with a protective synthetic layer (116) opposite said scale (21).

26. Calliper according to claim 24, characterised in that said slide (1) is of metal, in that said printed circuit board (115) is affixed directly onto said slide so that the magneto-resistive electrodes of said magneto-resistive sensor (112) are situated at a predetermined distance (a) of the scale (2), in that the slide is further provided with shock-proof coating (117) of synthetic material over said printed circuit, an aperture being provided through said shock-proof coating (117) for lodging said electronic display.

27. Calliper according to one of the claims 1 to 16, characterised in that said electronic means (11) further comprise an accumulator (110) and a linear generator (111), the displacement of said slide along said magnetic scale (21) generating a current in said linear generator (111), said current being used to recharge said accumulator (110), said accumulator powering said electronic means (11).

28. Calliper according to one of the claims 1 to 16, characterised in that said rod (2) and said slide (1) are of aluminium whereas said scale is of steel.

29. Calliper according to claim 28, characterised in that said scale (21) is covered with a non-magnetic protective layer (22).

30. Calliper according to the preceding claim, characterised in that said protective layer (22) bears a print (220) indicating at least approximately the position of the slide (1) along the rod (2).

31. Calliper according to claim 1, characterised in that said array of magneto-resistive electrodes (1121) comprises at least certain sets (A to D') of magneto-resistive electrodes (1121) constituted each of at least 8 electrodes connected in series, the thickness of the magneto-resistive electrodes (1121) being less than 100 nm, their length being included between 0,1 and 10 millimetres and their width being less than 40 μm, so that the resulting resistance of each set of magneto-resistive electrodes (A to D') is greater than 10 kΩ in order to be able to power said calliper only with said autonomous electric feeding means (110, 111).

**32.** Calliper according to the preceding claim, characterised in that said magneto-resistive electrodes (1121) are spread over at least two periods of magnetisation λ of the scale,

in that the resulting resistance of each set of electrodes (A to D') is greater than 50 kΩ,

in that said sets (A to D') of magneto-resistive electrodes (1121) connected in series are interconnected so as to define two measuring bridges,

and in that said electronic means use the signals (S, S'; C, C') at the output of said measuring bridges to determine the distance between said jaws (10, 20).

**33.** Calliper according to the preceding claim, characterised in that said magneto-resistive electrodes are distributed longitudinally so as to constitute x groups (1120) of magneto-resistive electrodes (1121), said groups being spaced by λ/4 and comprising at least two magneto-resistive electrodes of the same set and connected in series,
and in that the magneto-resistive electrodes (1121) constituting the second measuring bridge are dephased by λ/4 with respect to the magneto-resistive electrodes (1121) constituting the first measuring bridge, so that the signals at the output of the two bridges are dephased by λ/4.

**34.** Calliper according to claim 31, characterised in that the distance (a) between the magnetic scale (21) and the magneto-resistive electrodes is included in the interval between 0,2 and 0,7 millimetres,

in that the period of magnetisation λ of the scale is included between 0,5 and 1,5 millimetres,

and in that said magneto-resistive electrodes (1121) are spread longitudinally over a length greater than or equal to k=2 periods of magnetisation λ of the scale and greater than or equal to 3 millimetres.

**35.** Calliper according to claim 31, characterised in that at least certain magneto-resistive electrodes (1121) have barber-pole structures with several different orientations.

**Claims for the following Contracting States : GB, DE**

**1.** Portable electronic precision calliper (1) comprising a slide (1) capable of being displaced longitudinally along a rod (2), the slide and the rod being each provided with a jaw (10, respectively 20), the slide being further provided with electronic means (11) enabling an indication depending upon the distance between said jaws (10, 20) to be displayed on an electronic display (12), said electronic means comprising autonomous electric feeding means (110, 111),

said rod (2) being provided with a scale (21) magnetised with a period of magnetisation λ,

said electronic means (11) comprising a single sensor (112) provided with an array of n magneto-resistive electrodes (1121) disposed opposite said scale (21) so that the values of the resistances of the magneto-resistive electrodes are a function of their longitudinal position along the scale (21), n being greater than two, said array of magneto-resistive electrodes (1121) comprising at least certain sets (A to D') of magneto-resistive electrodes (1121) connected in series,

said electronic means (11) further comprising means (112, 113) capable of determining, from the resistance values of the magneto-resistive electrodes (1121), said indication depending upon the distance between said jaws (10, 20) and to display this indication on said electronic display (12),

characterised in that said sets are interconnected so as to define at least two measuring bridges,
and in that said electronic means (11) use the signals at the output of said at least two measuring bridges to determine the distance between said jaws (10, 20).

**2.** Calliper according to the preceding claim, characterised in that the number of magneto-resistive electrodes (1121) connected in series in each set (A to D') is greater than 8.

**3.** Calliper according to the preceding claim, characterised in that the thickness of the magneto-resistive electrodes is less than 100 nm, their length is included between 0,1 and 10 millimetres and their width is less than 40 μm.

4. Calliper according to the preceding claim, characterised in that the dimensions of the magneto-resistive electrodes (1121), their material and their number per set are chosen so that the resulting resistance of each set (A to D') of magneto-resistive electrodes is greater than 10 kΩ.

5. Calliper according to the preceding claim, characterised in that the dimensions of the magneto-resistive electrodes (1121), their material and their number per set are chosen so that the resulting resistance of each set (A to D') of magneto-resistive electrodes is greater than 50 kΩ.

6. Calliper according to claim 3, characterised in that said magneto-resistive electrodes (1121) are spread longitudinally over at least k=2 periods of magnetisation λ of the scale.

7. Calliper according to the preceding claim, characterised in that said sets (A to D') of magneto-resistive electrodes (1121) are constituted by electrodes occupying positions spread between kλ-w/2 and kλ+w/2.

8. Calliper according to claim 1, characterised in that the magneto-resistive electrodes (1121) constituting the second measuring bridge are dephased by λ/4 with respect to the magneto-resistive electrodes constituting the first measuring bridge, so that the signals (S, S'; C, C') at the output of the two bridges are dephased by 90°.

9. Calliper according to the preceding claim, characterised in that said magneto-resistive electrodes (1121) are distributed longitudinally so as to constitute x groups (1120) of magneto-resistive electrodes, said groups being spaced by λ/4 and comprising at least two magneto-resistive electrodes (1121) of the same set (A to D') connected in series.

10. Calliper according to one of the claims 1 to 9, characterised in that the distance (a) between the magnetised scale (21) and the magneto-resistive electrodes (1121) is included in the interval between 0,2 and 0,7 millimetres, and in that the scale period is included in the interval between 0,5 and 1,5 millimetres.

11. Calliper according to the preceding claim, characterised in that said magneto-resistive electrodes are spread longitudinally over at least k=2 periods of magnetisation λ of the scale.

12. Calliper according to the preceding claim, characterised in that said magneto-resistive electrodes are spread longitudinally over at least 3 millimetres.

13. Calliper according to one of the claims 1 to 12, characterised in that at least certain magneto-resistive electrodes (1121) have barber-pole structures.

14. Calliper according to the preceding claim, characterised in that said magneto-resistive electrodes (1121) have barber-pole structures with several different orientations.

15. Calliper according to claim 1, characterised in that said sensor (112) further comprises at least one compensation resistance of the measuring bridge or bridges, whose value can be adjusted by laser during manufacture so as to balance said measuring bridge when no magnetic field is applied.

16. Calliper according to one of the preceding claims, characterised in that said electronic means (11) are disposed on a printed circuit board (115), and in that said magneto-resistive sensor (112) is disposed on the side of the printed circuit (115) opposite said scale (21).

17. Calliper according to the preceding claim, characterised in that said electronic means (11) comprise a permanent magnet (114) disposed on the side of the printed circuit opposite the scale (21), close to said magneto-resistive electrodes (1121), in order to modify the direction and amplitude of the resulting magnetic field on said magneto-resistive electrodes (1121).

18. Calliper according to the preceding claim, characterised in that said magneto-resistive sensor (112) is covered with a protective synthetic layer (116) opposite said scale (21).

19. Calliper according to claim 17, characterised in that said slide (1) is of metal, in that said printed circuit board (115) is affixed directly onto said slide so that the magneto-resistive electrodes of said magneto-resistive sensor (112) are situated at a predetermined distance (a) of the scale (2), in that the slide is further provided with a shock-proof coating (117) of synthetic material over said printed circuit, an aperture being provided through said shock-proof coating (117) for lodging said electronic display.

20. Calliper according to one of the preceding claims, characterised in that said electronic means (11) further comprise an accumulator (110) and a linear generator (111), the displacement of said slide along said magnetic scale (21) generating a current in said linear generator (111), said current being used to recharge said accumulator (110), said accumulator powering said electronic means (11).

**21.** Calliper according to one of the preceding claims, characterised in that said rod (2) and said slide (1) are of aluminium whereas said scale is of steel.

**22.** Calliper according to the preceding claim, characterised in that said scale (21) is covered with a non-magnetic protective layer (22).

**23.** Calliper according to the preceding claim, characterised in that said protective layer (22) bears a print (220) indicating at least approximately the position of the slide (1) along the rod (2).

**24.** Calliper according to claim 1, characterised in that said array of magneto-resistive electrodes (1121) comprises at least certain sets (A to D') of magneto-resistive electrodes (1121) constituted each of at least 8 electrodes connected in series, the thickness of the magneto-resistive electrodes (1121) being less than 100 nm, their length being included between 0,1 and 10 millimetres and their width being less than 40 $\mu$m, so that the resulting resistance of each set of magneto-resistive electrodes (A to D') is greater than 10 k$\Omega$ in order to be able to power said calliper only with said autonomous electric feeding means (110, 111).

FIG. 1

FIG. 2

**FIG. 3**

EP 0 980 506 B1

**FIG. 4**